# EUROPEAN PATENT SPECIFICATION

(11) **EP 3 852 082 B1**
(45) Date of publication and mention of the grant of the patent: **02.04.2025**
(21) Application number: 20151687.9
(22) Date of filing: 14.01.2020
(51) Int. Cl.: G08G 1/16, G08G 1/01, G01S 17/93, G05D 1/00, H04W 4/44, H04W 4/02, H04L 67/131

(54) **SAFE OPERATION OF A VEHICLE USING AN EXTENDED DIGITAL ENVIRONMENTAL MODEL**
SICHERER BETRIEB EINES FAHRZEUGS UNTER VERWENDUNG EINES ERWEITERTEN DIGITALEN UMGEBUNGSMODELLS
FONCTIONNEMENT SÉCURISÉ D'UN VÉHICULE À L'AIDE D'UN MODÈLE ENVIRONNEMENTAL NUMÉRIQUE ÉTENDU

(43) Date of publication of application: 21.07.2021
(73) Proprietor: Deutsche Telekom AG, 53113 Bonn (DE)
(72) Inventor: SCHNIEDERS, Dominik, 52078 Aachen (DE)
(74) Representative: RDL Patentanwälte PartG mbB

(56) References cited:
- WO-A1-2019/236714
- US-A1- 2019 228 648
- US-A1- 2019 391 582

## Description

The invention relates to a method for operating a vehicle, wherein a vehicle is operated using a digital environmental model, the digital environmental model comprising object data related to one or more objects detected in a detection environment of the vehicle. The invention further relates to a computer program product for operating a vehicle.

Vehicles are increasingly provided with autonomous driving capabilities which at present are provided by advanced driving assistance systems (ADAS) and only cover particular operational contexts, i.e. traffic situations, of the vehicles (levels 2 and 3). However, fully autonomous vehicles (level 4) are expected to be available in the future which are operated basically without any intervention of a driver.

An autonomous driving functionality of a vehicle is, on the one hand, based on a digital environmental model of the vehicle. The digital environmental model comprises object data being related to one or more objects in a detection environment of the vehicle. The detection environment is defined by an area surrounding the vehicle and within ranges of environmental sensors of the vehicle.

On the other hand, the autonomous driving functionality may rely on external data like traffic data, weather data, construction site data and the like. Therefore, many vehicles have radio interface units for connecting to a radio access network (RAN) over the air (OTA), i.e. via a wireless connection. While traffic data, weather data, construction site data and the like will mostly not be time-critical, trajectory data, i.e. positions, velocities, accelerations, of vehicles involved in the same operational context, however, certainly is time-critical. Thus, autonomous driving functionalities relying on operational context data, i.e. adaptive cruise control (ACC) systems and the like, require external data in real time. As a consequence, the radio access network has to allocate a minimum data rate and/or a maximum latency to the wireless connection.

A list of items connected by "and/or" is to be understood as "at least one of" the listed items throughout the application.

The external data may also comprise a high definition map. US 2019/0228648 A1 discloses a method for updating an interoperable high definition map. A central server updates a tile of the interoperable high definition map with object data sensorially detected by vehicles in their respective environments and wirelessly provided to the central server by the vehicles. The vehicles are operated using the updated interoperable high definition map wirelessly provided by the central server.

US 2019/0391582 A1 discloses a method for controlling an autonomous vehicle. The method provides the autonomous vehicle with object data being sensorially detected or wirelessly received and concerning an environment of the autonomous vehicle. The autonomous vehicle adaptively maintains a distance from both a preceding and a following further vehicle using the provided object data.

Traffic situations may comprise a plurality of vehicles which have different detection environments and, hence, use different digital environmental models. Some vehicles have a small detection environment while other vehicles have a large detection environment. Digital environmental models of the former vehicles comprise less object data than digital environmental models of the latter vehicles. Thereby, the terms « large » and « small » shall be understood not only spatial, i.e. indicating a size of the detection environment, but also qualitative, i.e. indicating an amount or a precision of data.

As a result, the vehicles having a poorer digital environmental model covering a smaller detection environment are operated less safely than the vehicles having a richer digital environmental model comprising a larger detection environment. Consequently, vehicles having a poorer digital environmental model may easily impact a safe operation of vehicles having a richer digital environmental model, particularly in complex traffic situations comprising a high spatial density of a plurality of vehicles.

Hence, it would be desirable to increase an operational safety of vehicles being involved in complex traffic situations.

Therefore, it is an object of the present invention to propose a method for operating a vehicle which generally and particularly in complex traffic situations provides a safe operation of the vehicle. Another object of the invention is a computer program product for safely operating a vehicle.

One aspect of the invention is a method wherein a vehicle is operated according to claim 1.

In many embodiments, the positional data and the object data is detected and provided by at least one environmental sensor of the vehicle, the at least one environmental sensor defining the detection environment of the vehicle to be a union of detection areas of respective environmental sensors of the vehicle. The at least one environmental sensor may comprise a camera, a RADAR sensor, a LIDAR sensor, an ultrasonic sensor and the like. Furthermore the at least one environmental sensor may comprise a GPS antenna for providing the vehicle with positional data.

In other embodiments, the vehicle merges the detected object data and the virtual object data for generating the extended digital environmental model. The merging is done by the electronic control unit of the vehicle which reduces a load of the edge data center.

The edge data center may provide and execute a dedicated application for each connected vehicle, the dedicated applications exchanging detected object data via APIs (Application Programming Interface). The application architecture is flat, but may require the edge data center to simultaneously execute a plurality of equal dedicated applications exchanging object data with each other. The application architecture may be readily parallelized, i.e. simultaneously executed by a plurality of processors.

Alternatively or additionally,
- the vehicle provides the edge data center with the digital environmental model via the wireless connection;
- the edge data center merges the detected object data and the virtual object data for generating the extended digital environmental model;
- the edge data center provides the vehicle with the generated extended digital environmental model via the wireless connection, the extended digital environmental model comprising the virtual object data.

The merging is done by the edge data center which reduces a load of the electronic control unit of the vehicle.

The edge data center may provide and execute a single common application for all connected vehicles and an extension application, the common application forwarding each received digital environmental model to the extension application, the extension application generating and returning the extended digital environmental model to the common application. The application architecture is hierarchical and simple and requires the edge data center to simultaneously execute only two applications exchanging object data with each other.

The edge data center is preferably provided with an environmental model of at least one further vehicle, the detection environment of the at least one further vehicle spatially overlapping with the virtual environment of the vehicle and comprising the virtual object data. Due to the overlapping objects detected by the further vehicle may be virtual objects for the vehicle.

Most preferably, the edge data center is provided with respective digital environmental models of a plurality of further vehicles. The more further vehicles provide a digital environmental model the larger may the virtual environment be and, hence, the richer may the extended digital environmental model be.

In another embodiment, the edge data center matches digital environmental models of spatially overlapping detection environments and/or checks a plausibility of digital environmental models of spatially overlapping detection environments. The edge data center, thus, may apply corrections to the digital environmental models regarding the comprised object data. For instance, differing positional data of the same object detected by different vehicles may be averaged in order to obtain unique positional data. The edge data center also may eliminate a multiplicity of object data in order to only keep one instance of each object data. Furthermore, the edge data center may identify and correct any erroneous object data which may be provided by a defective environmental sensor.

In an embodiment, the edge data center updates detected object data and virtual object data dependent on a trajectory of the respective vehicle and/or a respective detected object. The trajectory comprises a position of the vehicle, a direction of the vehicle, a velocity of the vehicle and/or an acceleration of the vehicle. Updating the detected object data comprises advancing the detected object data on a time scale in order to prevent the object data from being outdated and obsolete.

In an embodiment, the cellular network allocates a predetermined combination of a minimum data rate and/or a maximum latency for uplink and downlink, respectively, to the wireless connection. A specification of a radio communication protocol may define a plurality of predetermined combinations of minimum data rate values and maximum latency values. The combinations may cover a range from a practical non-availability to an ideal availability of the data rate and/or latency and may prefer either the data rate or the latency between the non-availability and the ideal availability.

In an embodiment, the edge data center advantageously updates the detected object data and the virtual object data dependent on an uplink latency of the wireless connection and a run time within the cellular network. According to the invention, the edge data center transposes the additional object data into the future dependent on a downlink latency of the wireless connection and a run time within the cellular network. Updating the detected object data comprises forecasting the object data in order to compensate for delays caused by the cellular network. Due to the allocation of the minimum data rate and/or the maximum latency to the wireless communication a possible delay caused by the wireless connection is known to the edge data center.

In an embodiment, the extended digital environmental model is updated periodically or event-driven. Periodic updating ensures the extended digital environmental model to be always up to date. However, there might be superfluous updates. For instance, a traffic situation of vehicles waiting at a red traffic light does not change over a predetermined time. Event-driven updating avoids unnecessary updates, but may fail to always keep the digital environmental model up to date. This case may occur when an event requiring an update is missed. Eventually, periodic updates and event-driven updates may be advantageously combined.

Another aspect of the invention is a computer program product for operating a vehicle, according to claim 14.

An essential advantage of the inventive method is that a vehicle originally having a small detection environment is provided with a digital environmental model corresponding to a large detection environment. Thus, an operational safety of the vehicle is increased. In a complex traffic situation comprising the vehicle and further vehicles, the further vehicles are operated also more safely as a consequence. Therefore, an accident risk of the complex traffic situation is reduced.

Further advantages and configurations of the invention become apparent from the following description and the enclosed drawings.

The invention is described in detail by means of an exemplary embodiment and with reference to the drawings.
- Fig. 1: schematically shows a structural diagram of a radio access network according to an embodiment of the invention;
- Fig. 2: schematically shows a top view of a plurality of vehicles being operated in a method according to an embodiment of the invention.

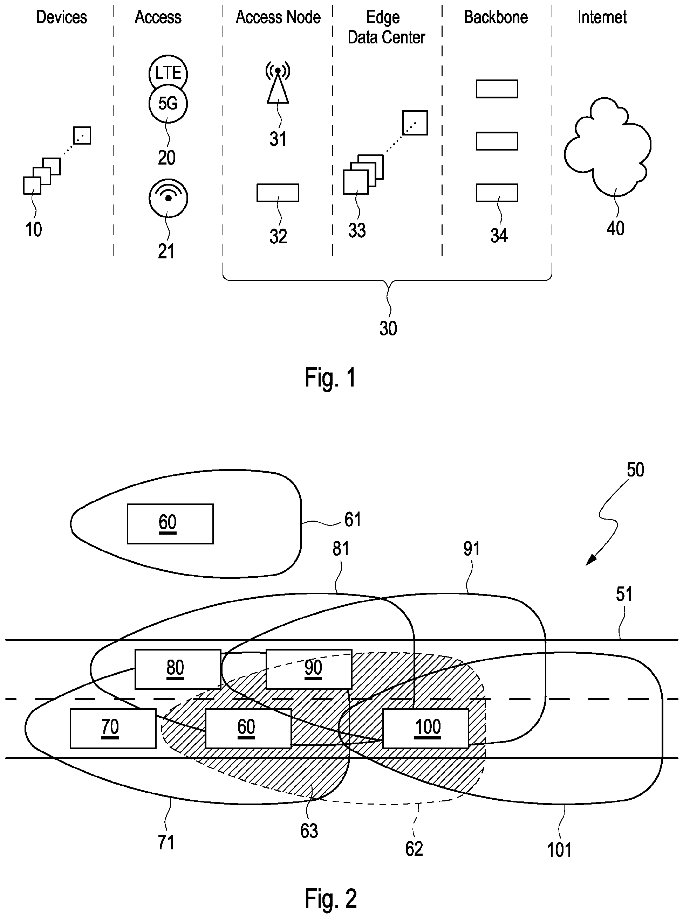

Fig. 1 schematically shows a structural diagram of a radio access network 30 according to an embodiment of the invention. The radio access network 30 comprises a plurality of access nodes 31, 32 with the access node 31 being configured as a base station of a cellular communication network and the access node 32 being configured as a W-LAN router. Each access node 31, 32 supports corresponding wireless connections 20, 21, the wireless connection 20 being configured according to a standardized radio technology, i.e. LTE, 5G, a previous or a future radio technology standard and the wireless connection 21 being configured according to the standard IEEE 802.11 family.

Furthermore, the radio access network 30 comprises a plurality of edge data centers 33 and a backbone having a plurality of stationary backbone nodes 34. The stationary backbone nodes 34 are not qualified in detail for avoiding any confusion as they are not essential for the invention. The random access network 30 provides wireless connections to a plurality of user equipment devices 10, the wireless connections allowing the user equipment devices 10 to access an internet 40 which is symbolized as a cloud.

The radio access network 30 and the user equipment device 10 comprise a program code of a computer program product according to the invention. The program code is executed by a processor of a user equipment device 10 and/or by a processor of a stationary network node of the radio access network 30.

Fig. 2 schematically shows a top view of a plurality of vehicles 60, 70, 80, 90, 100 being operated in a method according to an embodiment of the invention. The vehicles 60, 70, 80, 90, 100 are user equipment devices 10 as shown in fig. 1.

Each vehicle 60, 70, 80, 90, 100 has a respective detection environment 61, 71, 81, 91, 101. The vehicle 60 originally has a small detection environment 61 which is additionally illustrated separate for a better overview. Each vehicle 60, 70, 80, 90, 100 comprises at least one environmental sensor, a radio interface unit and an electronic control unit being connected to each environmental sensor and the radio interface unit. These components of the vehicles 60, 70, 80, 90, 100 are not shown for avoiding any confusion as they are well known.

The vehicles 60, 70, 80, 90, 100 are involved in a complex traffic situation 50 comprising five vehicles driving on two parallel lanes of a road 51 next to each other. In the traffic situation 50 the vehicle 60 has an extended environment 63 which is a union of portions of the detection environments 71, 81, 91, 101 overlapping with a virtual environment 62 of the vehicle 60.

When there is no overlapping of a detection environment 71, 81, 91, 101 with the virtual environment 62 of the vehicle 60, i.e. in a simple traffic situation, the vehicle 60 is operated using a digital environmental model wherein the digital environmental model comprises object data related to one or more objects detected in the detection environment 61 of the vehicle 60. In the illustrated example, only the further vehicles 80, 90 would be objects within the detection environment 61 of the vehicle 60.

During the operation of the vehicle 60, the vehicle 60 provides the edge data center 33 of the cellular network 30 with positional data of the vehicle 60 via a wireless connection 20, 21 to the cellular network 30. The cellular network 30 allocates a predetermined combination of a minimum data rate and/or a maximum latency for uplink and downlink, respectively, to the wireless connections 20, 21.

The positional data and the object data are detected and provided by at least one environmental sensor of the vehicle 60. The at least one environmental sensor defines the detection environment 61 of the vehicle 60 to be a union of detection areas of respective environmental sensors of the vehicle 60. The vehicle 60 may comprise a camera, a RADAR sensor, a LIDAR sensor, an ultrasonic sensor and/or the like. Furthermore the vehicle 60 may comprise a GPS antenna for providing the vehicle with positional data.

The edge data center 33 is provided with environmental models of the further vehicles 70, 80, 90, 100. The detection environments 71, 81, 91, 101 of the further vehicles 70, 80, 90, 100 spatially overlap with the virtual environment 62 of the vehicle 60 and comprise virtual object data.

Furthermore, the edge data server updates detected object data and virtual object data dependent on a trajectory of the respective vehicle 60, 70, 80, 90, 100 and/or a respective detected object. Apart from that, the edge data server updates the detected object data and the virtual object data dependent on an uplink latency of the wireless connection 20, 21 and a run time within the cellular network 30 and/or transposes the additional object data into the future dependent on a downlink latency of the wireless connection 20, 21 and a run time within the cellular network 30.

The edge data center 33 provides the vehicle 60 with the virtual object data via the wireless connection 20, 21. The edge data center 33 determines the virtual environment 62 of the vehicle 60 to be an environment located according to the provided positional data.

The virtual object data is related to one or more objects in the virtual environment 62 of the provided positional data which spatially exceeds the detection environment 61 of the vehicle 60.

In one embodiment, the vehicle 60, i.e. the electronic control unit of the vehicle 60, merges the detected object data and the virtual object data for generating an extended digital environmental model. The edge data center 33 provides and executes a dedicated application for each connected vehicle 60, 70, 80, 90, 100. The dedicated applications have respective APIs and exchange detected object data via the APIs.

In an alternative embodiment, the vehicle 60 provides the edge data center 33 with the digital environmental model via the wireless connection 20, 21. The edge data center 33 merges the detected object data and the virtual object data for generating the extended digital environmental model. The edge data center 33 provides the vehicle 60 with the generated extended digital environmental model comprising the virtual object data via the wireless connection 20, 21. The edge data center 33 provides and executes a single common application for all connected vehicles 60, 70, 80, 90, 100 and an extension application, the common application forwarding each received digital environmental model to the extension application, the extension application generating and returning the extended digital environmental model to the common application.

The edge data center 33 matches the digital environmental models of the spatially overlapping detection environments 61, 71, 81, 91, 101 and checks a plausibility of the digital environmental models of the spatially overlapping detection environments 61, 71, 81, 91, 101.

The vehicle 60 is operated using the extended digital environmental model comprising a union of the detected object data and the virtual object data and covering the extended environment 63 of the vehicle 60. The extended environment 63 exceeds the detection environment 61 of the vehicle 60. The extended environmental model comprises object data related to the further vehicles 70 and 100. The extended digital environmental model is updated periodically or event-driven during operation of the vehicle 60.

The method has been explained with respect to the vehicle 60. However, the method may be simultaneously carried out for each of the further vehicles 70, 80, 90, 100 with the vehicles 60, 70, 80, 90, 100 swapping roles with respect to the method.

### Reference numerals

- 10: user equipment device

- 20: wireless connection
- 21: wireless connection

- 30: radio access network
- 31: access node
- 32: access node
- 33: edge data center
- 34: backbone

- 40: internet

- 50: traffic situation
- 51: road

- 60: vehicle
- 61: detection environment
- 62: virtual environment
- 63: extended environment

- 70: further vehicle
- 71: detection environment

- 80: further vehicle
- 81: detection environment

- 90: further vehicle
- 91: detection environment

- 100: further vehicle
- 101: detection environment

## Claims

1. A method for operating a vehicle (60), wherein
- a vehicle (60) is operated using a digital environmental model, the digital environmental model being defined by at least one environmental sensor of the vehicle (60) and comprising object data related to one or more objects detected in a detection environment (61) of the vehicle (60);
- the vehicle (60) provides an edge data center (33) of a cellular network (30) with positional data of the vehicle (60) via a wireless connection (20, 21) to the cellular network (30);
- the edge data center (33) provides the vehicle (60) with virtual object data via the wireless connection (20, 21), the virtual object data being related to one or more objects in a virtual environment (62) of the provided positional data which spatially exceeds the detection environment (61) of the vehicle (60);
- the vehicle (60) is operated using an extended digital environmental model comprising a union of the detected object data and the virtual object data and covering an extended environment (63) of the vehicle (60), the extended environment (63) exceeding the detection environment (61) of the vehicle (60),
**characterised in that** the virtual environment (61) comprises additional objects missing in the detection environment, wherein the edge data center (33) transposes the additional object data into the future dependent on a downlink latency of the wireless connection (20, 21) and a runtime within the cellular network (30);

2. The method according to claim 1, wherein the positional data and the object data is detected and provided by at least one environmental sensor of the vehicle (60), the at least one environmental sensor defining the detection environment (61) of the vehicle (60) to be a union of detection areas of respective environmental sensors of the vehicle (60).

3. The method according to one of the preceding claims, wherein the vehicle (60) merges the detected object data and the virtual object data for generating the extended digital environmental model.

4. The method according to one of the preceding claims, wherein the edge data center (33) provides and executes a dedicated application for each connected vehicle (60, 70, 80, 90, 100), the dedicated applications exchanging detected object data via APIs.

5. The method according to claim 1 or 2, wherein
- the vehicle (60) provides the edge data center (33) with the digital environmental model via the wireless connection (20, 21);
- the edge data center (33) merges the detected object data and the virtual object data for generating the extended digital environmental model;
- the edge data center (33) provides the vehicle (60) with the generated extended digital environmental model via the wireless connection (20, 21), the extended digital environmental model comprising the virtual object data.

6. The method according to claim 5, wherein the edge data center (33) provides and executes a single common application for all connected vehicles (60, 70, 80, 90, 100) and an extension application, the common application forwarding each received digital environmental model to the extension application, the extension application generating and returning the extended digital environmental model to the common application.

7. The method according to one of the preceding claims, wherein the edge data center (33) is provided with an environmental model of at least one further vehicle (70, 80, 90, 100), the detection environment (71, 81, 91, 101) of the at least one further vehicle (70, 80, 90, 100) spatially overlapping with the virtual environment (62) of the vehicle (60) and comprising the virtual object data.

8. The method according to claim 7, wherein the edge data center (33) is provided with respective digital environmental models of a plurality of further vehicles (70, 80, 90, 100).

9. The method according to one of the preceding claims, wherein the edge data center (33) matches digital environmental models of spatially overlapping detection environments (61, 71, 81, 91, 101) and/or checks a plausibility of digital environmental models of spatially overlapping detection environments (61, 71, 81, 91, 101).

10. The method according to one of the preceding claims, wherein the edge data center (33) updates detected object data and virtual object data dependent on a trajectory of the respective vehicle (60, 70, 80, 90, 100) and/or a respective detected object.

11. The method according to one of the preceding claims, wherein the cellular network (30) allocates a predetermined combination of a minimum data rate and/or a maximum latency for uplink and downlink, respectively, to the wireless connection (20, 21).

12. The method according to one of the preceding claims, wherein the edge data center (33) updates the detected object data and the virtual object data dependent on an uplink latency of the wireless connection (20, 21) and a run time within the cellular network (30).

13. The method according to one of the preceding claims, wherein the extended digital environmental model is updated periodically or event-driven.

14. A computer program product comprising a computer readable storage medium storing a program code, the program code being executable by a computing device and causing the computing device to carry out a method according to one of claims 1 to 13 when being executed by a processor of the computing device.

## Patentansprüche

1. Verfahren zum Betreiben eines Fahrzeugs (60), wobei
- ein Fahrzeug (60) unter Verwendung eines digitalen Umgebungsmodells betrieben wird, wobei das digitale Umgebungsmodell durch mindestens einen Umgebungssensor des Fahrzeugs (60) definiert wird und Objektdaten umfasst, die sich auf ein oder mehrere Objekte beziehen, die in einer Erfassungsumgebung (61) des Fahrzeugs (60) erfasst werden;
- das Fahrzeug (60) einem Edge-Datenzentrum (33) eines Mobilfunknetzes (30) über eine drahtlose Verbindung (20, 21) mit dem Mobilfunknetz (30) Positionsdaten des Fahrzeugs (60) bereitstellt;
- das Edge-Datenzentrum (33) dem Fahrzeug (60) über die drahtlose Verbindung (20, 21) Daten virtueller Objekte bereitstellt, wobei die Daten virtueller Objekte mit einem oder mehreren Objekten in einer virtuellen Umgebung (62) der bereitgestellten Positionsdaten in Beziehung stehen, die die Erfassungsumgebung (61) des Fahrzeugs (60) räumlich übersteigt
- das Fahrzeug (60) unter Verwendung eines erweiterten digitalen Umgebungsmodells betrieben wird, das eine Vereinigung der Daten erfasster Objekte und der Daten virtueller Objekte umfasst und eine erweiterte Umgebung (63) des Fahrzeugs (60) abdeckt, wobei die erweiterte Umgebung (63) die Erfassungsumgebung (61) des Fahrzeugs (60) übersteigt,
**dadurch gekennzeichnet, dass** die virtuelle Umgebung (61) zusätzliche Objekte umfasst, die in der Erfassungsumgebung fehlen, wobei das Edge-Datenzentrum (33) die zusätzlichen Objektdaten in Abhängigkeit von einer Downlink-Latenz der drahtlosen Verbindung (20, 21) und einer Laufzeit innerhalb des Mobilfunknetzes (30) in die Zukunft transponiert.

2. Verfahren nach Anspruch 1, wobei die Positionsdaten und die Objektdaten von mindestens einem Umgebungssensor des Fahrzeugs (60) erfasst und bereitgestellt werden, wobei der mindestens eine Umgebungssensor die Erfassungsumgebung (61) des Fahrzeugs (60) als eine Vereinigung von Erfassungsbereichen jeweiliger Umgebungssensoren des Fahrzeugs (60) definiert.

3. Verfahren nach einem der vorangegangenen Ansprüche, wobei das Fahrzeug (60) die Daten erfasster Objekte und die Daten virtueller Objekte zum Erzeugen des erweiterten digitalen Umgebungsmodells zusammenführt.

4. Verfahren nach einem der vorangegangenen Ansprüche, wobei das Edge-Datenzentrum (33) eine dedizierte Anwendung für jedes verbundene Fahrzeug (60, 70, 80, 90, 100) bereitstellt und ausführt, wobei die dedizierten Anwendungen Daten erfasster Objekte über APIs austauschen.

5. Verfahren nach Anspruch 1 oder 2, wobei
- das Fahrzeug (60) dem Edge-Datenzentrum (33) über die drahtlose Verbindung (20, 21) das digitale Umgebungsmodell bereitstellt;
- das Edge-Datenzentrum (33) die Daten erfasster Objekte und die Daten virtueller Objekte zum Erzeugen des erweiterten digitalen Umgebungsmodells zusammenführt;
- das Edge-Datenzentrum (33) dem Fahrzeug (60) über die drahtlose Verbindung (20, 21) das erzeugte erweiterte digitale Umgebungsmodell bereitstellt, wobei das erweiterte digitale Umgebungsmodell die Daten virtueller Objekte umfasst.

6. Verfahren nach Anspruch 5, wobei das Edge-Datenzentrum (33) eine einzige gemeinsame Anwendung für alle verbundenen Fahrzeuge (60, 70, 80, 90, 100) und eine Erweiterungsanwendung bereitstellt und ausführt, wobei die gemeinsame Anwendung jedes empfangene digitale Umgebungsmodell an die Erweiterungsanwendung weiterleitet und die Erweiterungsanwendung das erweiterte digitale Umgebungsmodell erzeugt und an die gemeinsame Anwendung zurückgibt.

7. Verfahren nach einem der vorangegangenen Ansprüche, wobei dem Edge-Datenzentrum (33) ein Umgebungsmodell von mindestens einem weiteren Fahrzeug (70, 80, 90, 100) bereitgestellt wird, wobei die Erfassungsumgebung (71, 81 , 91, 101) des mindestens einen weiteren Fahrzeugs (70, 80, 90, 100) räumlich mit der virtuellen Umgebung (62) des Fahrzeugs (60) überlappt und die Daten virtueller Objekte umfasst.

8. Verfahren nach Anspruch 7, wobei dem Edge-Datenzentrum (33) jeweilige digitale Umgebungsmodelle einer Mehrzahl weiterer Fahrzeuge (70, 80, 90, 100) bereitgestellt wird.

9. Verfahren nach einem der vorangegangenen Ansprüche, wobei das Edge-Datenzentrum (33) digitale Umgebungsmodelle von räumlich überlappenden Erfassungsumgebungen (61, 71, 81, 91, 101) abgleicht und/oder eine Plausibilität von digitalen Umgebungsmodellen von räumlich überlappenden Erfassungsumgebungen (61, 71, 81, 91, 101) überprüft.

10. Verfahren nach einem der vorangegangenen Ansprüche, wobei das Edge-Datenzentrum (33) Daten erfasster Objekte und Daten virtueller Objekte in Abhängigkeit von einer Trajektorie des jeweiligen Fahrzeugs (60, 70, 80, 90, 100) und/oder eines jeweiligen erfassten Objekts aktualisiert.

11. Verfahren nach einem der vorangegangenen Ansprüche, wobei das Mobilfunknetz (30) der drahtlosen Verbindung (20, 21) eine vorbestimmte Kombination aus einer minimalen Datenrate und/oder einer maximalen Latenz jeweils für den Uplink und den Downlink zuweist.

12. Verfahren nach einem der vorangegangenen Ansprüche, wobei das Edge-Datenzentrum (33) die Daten erfasster Objekte und die Daten virtueller Objekte in Abhängigkeit von einer Uplink-Latenz der drahtlosen Verbindung (20, 21) und einer Laufzeit innerhalb des Mobilfunknetzes (30) aktualisiert.

13. Verfahren nach einem der vorangegangenen Ansprüche, wobei das erweiterte digitale Umgebungsmodell periodisch oder ereignisgesteuert aktualisiert wird.

14. Computerprogrammprodukt, das ein computerlesbares Speichermedium umfasst, das einen Programmcode speichert, wobei der Programmcode von einer Rechenvorrichtung ausführbar ist und die Rechenvorrichtung veranlasst, ein Verfahren gemäß einem der Ansprüche 1 bis 13 durchzuführen, wenn es von einem Prozessor der Rechenvorrichtung ausgeführt wird.

## Revendications

1. Procédé pour faire fonctionner un véhicule (60), dans lequel
- un véhicule (60) fonctionne à l'aide d'un modèle environnemental numérique, le modèle environnemental numérique étant défini par au moins un capteur environnemental du véhicule (60) et comprenant des données d'objets relatives à un ou à plusieurs objets détectés dans un environnement de détection (61) du véhicule (60) ;
- le véhicule (60) fournit à un centre de données périphérique (33) d'un réseau cellulaire (30) des données de position du véhicule (60) via une connexion sans fil (20, 21) au réseau cellulaire (30) ;
- le centre de données périphérique (33) fournit au véhicule (60) des données d'objets virtuels via la connexion sans fil (20, 21), les données d'objets virtuels étant associées à un ou plusieurs objets dans un environnement virtuel (62) des données de position fournies dépassant spatialement l'environnement de détection (61) du véhicule (60) ;
- le véhicule (60) fonctionne à l'aide d'un modèle environnemental numérique étendu comprenant une union des données d'objets détectés et des données d'objets virtuels et couvrant un environnement étendu (63) du véhicule (60), l'environnement étendu (63) dépassant l'environnement de détection (61) du véhicule (60),
**caractérisé en ce que** l'environnement virtuel (61) comprend des objets supplémentaires manquants dans l'environnement de détection, le centre de données périphérique (33) transposant dans le futur les données d'objets supplémentaires en fonction d'une latence de liaison descendante de la connexion sans fil (20, 21) et d'une durée d'exécution au sein du réseau cellulaire (30).

2. Procédé selon la revendication 1, dans lequel les données de position et les données d'objets sont détectées et fournies par au moins un capteur environnemental du véhicule (60), le au moins un capteur environnemental définissant l'environnement de détection (61) du véhicule (60) comme une union de zones de détection de capteurs environnementaux respectifs du véhicule (60).

3. Procédé selon l'une des revendications précédentes, dans lequel le véhicule (60) fusionne les données d'objets détectés et les données d'objets virtuels pour générer le modèle environnemental numérique étendu.

4. Procédé selon l'une des revendications précédentes, dans lequel le centre de données périphérique (33) fournit et exécute une application dédiée pour chaque véhicule connecté (60, 70, 80, 90, 100), les applications dédiées échangeant des données d'objets détectés via API.

5. Procédé selon la revendication 1 ou 2, dans lequel
- le véhicule (60) fournit au centre de données périphérique (33) le modèle environnemental numérique via la connexion sans fil (20, 21) ;
- le centre de données périphérique (33) fusionne les données d'objets détectés et les données d'objets virtuels pour générer le modèle environnemental numérique étendu ;
- le centre de données périphérique (33) fournit au véhicule (60) le modèle environnemental numérique étendu généré via la connexion sans fil (20, 21), le modèle environnemental numérique étendu comprenant les données d'objets virtuels.

6. Procédé selon la revendication 5, dans lequel le centre de données périphérique (33) fournit et exécute une application commune unique pour tous les véhicules connectés (60, 70, 80, 90, 100) et une application d'extension, l'application commune transmettant chaque modèle environnemental numérique reçu à l'application d'extension, l'application d'extension générant le modèle environnemental numérique étendu et le renvoyant à l'application commune.

7. Procédé selon l'une des revendications précédentes, dans lequel le centre de données périphérique (33) reçoit un modèle environnemental d'au moins un autre véhicule (70, 80, 90, 100), l'environnement de détection (71, 81, 91, 101) de ce au moins un autre véhicule (70, 80, 90, 100) se superposant spatialement à l'environnement virtuel (62) du véhicule (60) et comprenant les données d'objets virtuels.

8. Procédé selon la revendication 7, dans lequel le centre de données périphérique (33) reçoit des modèles environnementaux numériques respectifs d'une pluralité d'autres véhicules (70, 80, 90, 100).

9. Procédé selon l'une des revendications précédentes, dans lequel le centre de données périphérique (33) assortit des modèles environnementaux numériques d'environnements de détection (61, 71, 81, 91, 101) se superposant spatialement et/ou vérifie la plausibilité de modèles environnementaux numériques d'environnements de détection (61, 71, 81, 91, 101) se superposant spatialement.

10. Procédé selon l'une des revendications précédentes, dans lequel le centre de données périphérique (33) met à jour des données d'objets détectés et des données d'objets virtuels en fonction de la trajectoire du véhicule (60, 70, 80, 90, 100) respectif et/ou d'un objet détecté respectif.

11. Procédé selon l'une des revendications précédentes, dans lequel le réseau cellulaire (30) attribue à la connexion sans fil (20, 21) une combinaison prédéterminée d'un débit de données minimal et/ou d'une latence maximale pour la liaison montante et la liaison descendante, respectivement.

12. Procédé selon l'une des revendications précédentes, dans lequel le centre de données périphérique (33) met à jour les données d'objets détectés et les données d'objets virtuels en fonction d'une latence de liaison montante de la connexion sans fil (20, 21) et d'une durée d'exécution au sein du réseau cellulaire (30).

13. Procédé selon l'une des revendications précédentes, dans lequel le modèle environnemental numérique étendu est mis à jour régulièrement ou en fonction d'un événement.

14. Produit de programme informatique comprenant un support de stockage lisible par ordinateur stockant un code de programme, le code de programme étant exécutable par un dispositif informatique et amenant le dispositif informatique à exécuter un procédé selon l'une des revendications 1 à 13 lorsqu'il est exécuté par un processeur du dispositif informatique.
